# EUROPÄISCHE PATENTSCHRIFT

(11) **EP 1 719 662 B1**
(45) Veröffentlichungstag und Bekanntmachung des Hinweises auf die Patenterteilung: **18.03.2009**
(21) Anmeldenummer: 06113543.0
(22) Anmeldetag: 05.05.2006
(51) Int. Cl.: B60Q 1/076

(54) **Detektion der Nulllage eines Schwenkmoduls**
Detection of the zero position of a tiltable module
Détection de la position zero d'un module pivotable

(30) Priorität: 06.05.2005 DE 102005021043
(43) Veröffentlichungstag der Anmeldung: 08.11.2006
(73) Patentinhaber: Hella KGaA Hueck & Co., 59552 Lippstadt (DE)
(72) Erfinder: Plotzitzka, Jörg, 33397 Rietberg (DE); Kirchner, Stefan, 98673 Eisfeld (DE); Korff, Detlef, 59557 Lippstadt (DE)

(56) Entgegenhaltungen:
- EP-A- 1 481 846
- EP-A- 1 527 949
- US-A1- 2004 212 341

## Beschreibung

### STAND DER TECHNIK

Die Erfindung betrifft eine Scheinwerferanordnung für ein Kraftfahrzeug nach dem Oberbegriff des Patentanspruchs 1.

Aus der Druckschrift mit der Veröffentlichungsnummer DE 102 41 214 A1 ist eine Scheinwerferanordnung der eingangs genannten Art bekannt. Die Reflektoreinheit ist bei einer Kurvenfahrt des Kraftfahrzeugs in Abhängigkeit vom Lenkradeinschlag und/oder des Einschlags der Vorderräder um die im Wesentlichen senkrecht zum Untergrund des Kraftfahrzeugs verlaufende Achse verschwenkbar. Ferner sind bei Kraftfahrzeugen die Reflektoreinheiten um eine im Wesentlichen horizontale Achse verschwenkbar, um die Reichweite der Scheinwerfer in Abhängigkeit von der Zuladung im Heckbereich des Kraftfahrzeugs einzustellen (Leuchtweitenregulierung).

Damit im Betrieb des Kraftfahrzeugs die Stellung der Reflektoreinheiten relativ zu einer horizontalen Ausrichtung beziehungsweise zu einer Ausrichtung in eine Geradeausfahrtrichtung erfasst werden kann, ist das Erfassungsmittel vorgesehen. Dieses kann dabei insbesondere zum Feststellen einer Initialisierungsposition genutzt werden

Das Erfassungsmittel umfasst einen Hallsensor und einen Positionsgeber mit einem magnetisch wirksamen Element, beispielsweise einem Dauermagneten. Der Hallsensor ist als Hallschalter ausgestaltet und erzeugt je nachdem ob der Nord- oder der Südpol benachbart angeordnet ist, d. h. in Abhängigkeit des magnetischen Flusses am Ausgang des Erfassungsmittels ein High- oder ein Low-Signal. Sobald der von dem Hallschalter beim Verschwenken des Positionsgebers erfasste Bereich des Positionsgebers vom Nord- auf den Südpol wechselt oder umgekehrt, führt dies im Hallschalter zum Wechsel von Low zu High oder umgekehrt. Am Ausgang des Erfassungsmittels ist dies als Schaltflanke erkennbar. Vorzugsweise werden die Positionsgeber so angeordnet, dass der Wechsel vom Nord- zum Südpol und umgekehrt mit der Schwenkstellung der Reflektoreinheit zusammenfällt, in der die Reflektoreinheit in Geradeausrichtung des Kraftfahrzeugs ausgerichtet ist. Das Sensorelement ist vorzugsweise ebenfalls so angeordnet, dass der Wechsel vom High- zum Low-Signal beziehungsweise umgekehrt immer genau dann erfolgt, wenn die Geradeausposition der Reflektoreinheit erreicht wird. Aus konstruktiven Gründen kann dies jedoch nicht immer gewährleistet werden oder dies kann sogar nachteilig sein, da es die Gestaltung der Mechanik der Scheinwerferanordnung einschränkt.

Eine Abweichung der Nulllage des Sensorelements zur Nulllage, d. h. Geradeausrichtung der Reflektoreinheit ist damit möglich. Eine derartige Abweichung kann bei dem Zusammenbau der Scheinwerferanordnung bestimmt werden. Dieses ist in der Druckschrift DE 102 41 214 A1 beschrieben.

In der Druckschrift ist jedoch nicht beschrieben, wie diese Abweichung beim Betrieb des Kraftfahrzeugs beziehungsweise der Scheinwerferanordnung verwendet werden kann.

Aus EP 1 481 846 A1 ist eine gattungsmäßige Scheinwerferanordnung für ein Kraftfahrzeug bekannt.

### VORTEILE DER ERFINDUNG

Der Erfindung liegt daher die Aufgabe zugrunde, eine Scheinwerferanordnung der eingangs genannten Art so weiterzubilden, dass die Abweichung zwischen der Nulllage der Reflektoreinheit und der Nulllage des Sensorelements im Betrieb der Scheinwerferanordnung berücksichtigt werden kann.

Diese Aufgabe wird erfindungsgemäß durch die Merkmale des Patentanspruchs 1 gelöst.

Eine erfindungsgemäße Scheinwerferanordnung umfasst ein Steuergerät, das über eine Schnittstelle zur Kommunikation mit einem Kommunikationsnetzwerk in dem Kraftfahrzeug verbindbar ist und dass zumindest eine weitere Schnittstelle, einen LIN-Bus zur Kommunikation mit den Erfassungsmitteln und/oder elektronischen Komponenten im Bereich der Reflektoranordnung aufweist. So kann über diese weitere Schnittstelle, d. h. über den LIN-Bus, das Steuergerät mit einem Stellglied zum Verschwenken der Reflektoreinheit verbunden sein. Das Stellglied kann ein Linear-Schritt-Motor sein, dem ein Treibermodul zugeordnet ist, welches das über den LIN-Bus empfangene Signal in ein Steuerbeziehungsweise Stellsignal für den Motor umsetzt.

Der Speicher für die Lage des Sensorelements, d. h. für die Abweichung der Nulllage des Sensorelements zur Nulllage der Reflektoreinheit kann in dem Steuergerät oder in Erfassungsmittel angeordnet sein. Vorteilhaft ist der Speicher jedoch in dem Stellglied zum Verschwenken der Reflektoreinheit angeordnet. Da die Abweichung beziehungsweise die Lage des Sensorelements eine Eigenschaft des Erfassungsmittels im Verhältnis zur Reflektoreinheit ist, ist der Speicher vorzugsweise auch an diesen Teilen der Scheinwerferanordnung vorgesehen. Sofern nämlich das Steuergerät unabhängig von der Reflektoreinheit und dem Erfassungsmittel und dem Stellglied ausgewechselt wird oder aber umgekehrt die Reflektoreinheit mit dem damit in der Regel verbundenen Erfassungsmittel und mit dem Stellglied ausgewechselt wird, bleibt die das Verhältnis des Erfassungsmittels zur Reflektoreinheit kennzeichnende Größe mit diesem verbunden.

Mittels des Steuergeräts, des Erfassungsgeräts oder des Stellgliedes kann der Speicher für die Lage des Sensorelements ausgelesen werden.

Gemäß der Erfindung kann mittels des Steuergeräts, des Erfassungsmittels oder des Stellglieds aus dem aus dem Speicher ausgelesene Wert und dem aus dem Erfassungsmittel übermittelten beziehungsweise ermittelten Schwenkwinkel ein um die Lage des Sensorelements korrigierter Schwenkwinkel ermittelt werden. Dieser korrigierte Schwenkwinkel dient dann der weiteren Berechnung der Stellgrößen, die an das Stellglied zum Verstellen der Reflektoreinheit gegeben werden.

### ZEICHNUNGEN

Anhand der Zeichnung ist schematisch die Erfindung näher erläutert. Es zeigt
- Fig. 1: eine Draufsicht auf eine schematische Darstellung einer erfindungsgemäßen Scheinwerferanordnung,
- Fig. 2: eine Darstellung des Ausgangssignals des Sensorelements in Abhängigkeit vom Schwenkwinkel bei einem Hallschalter ohne Hysterese und
- Fig. 3: den das Ausgangssignal des Sensorelements in Abhängigkeit vom Schwenkwinkel bei einem hysteresebehafteten Hallschalter.

### BESCHREIBUNG DER AUSFÜHRUNGSBEISPIELE

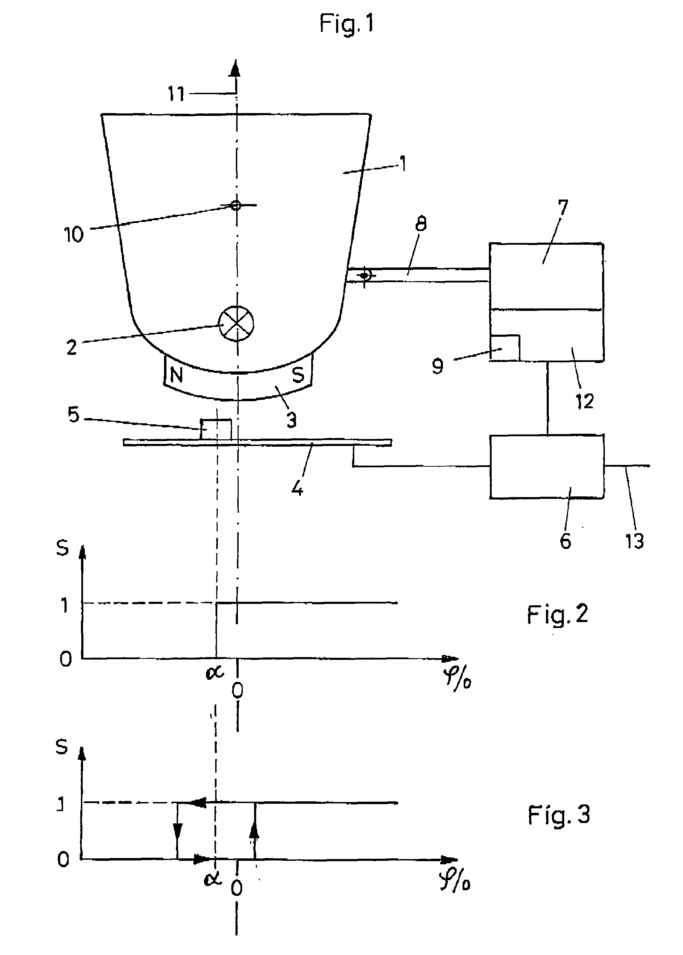

Die in Fig. 1 dargestellte erfindungsgemäße Scheinwerferanordnung weist eine Reflektoranordnung auf, in welche ein Leuchtmittel 2 eingesetzt ist. Die Reflektoranordnung ist bei Geradeausfahrt in der mit dem Bezugszeichen 11 bezeichneten Richtung ausgerichtet. Während einer Kurvenfahrt kann die Reflektoranordnung um einen Schwenkpunkt 10 verschwenkt werden.

Zum Verschwenken der Reflektoranordnung ist die Reflektoranordnung 1 über eine Schubstange 8 mit einem Stellantrieb, es handelt sich hierbei um einen Linearantrieb 7, verbunden. Der Linearantrieb 7 bildet zusammen mit einer Treiberschaltung 12 das Stellglied 7, 12 der Scheinwerferanordnung.

Die Treiberschaltung 12 ist über einen LIN-Bus mit einem Steuergerät 6 verbunden, in dem die Steuersignale zum Verschwenken der Reflektoranordnung 1 ermittelt werden. Um das Stellglied 7, 12 sinnvoll ansteuern zu können, ist es notwendig, dass das Steuergerät 6 die Stellung der Reflektoranordnung 1 kennt. Dazu ist ein Erfassungsmittel 3, 5 vorgesehen. Dieses Erfassungsmittel umfasst ein Positionsgeber 3, der durch einen Permanentmagneten gebildet wird. Dieser Permanentmagnet ist so angeordnet, dass die Nulllage der Reflektoranordnung genau dann erreicht ist, wenn die Mitte des Permanentmagnets auf der Achse 11 liegt.

Das Erfassungsmittel 3, 5 umfasst ferner einen Hallschalter 5, der mit weiteren nicht dargestellten elektrischen Bauelementen auf einem Schaltungsträger 4 angeordnet ist. Der Hallschalter erzeugt in Abhängigkeit des Schwenkwinkels ein digitales Ausgangssignal, wie es in Fig. 2 dargestellt ist. Aus konstruktiven Gründen und aus Gründen der Fehlertoleranz ist der Hallschalter nie exakt auf der Achse 11 angeordnet, so dass sich zwischen der Nulllage des Hallschalters, d. h., dem Übergangspunkt vom Highsignal zum Lowsignal und umgekehrt nicht mit der Nulllage der Reflektoreinheit zusammenfällt. Diese Abweichung wird erfindungsgemäß nach dem Zusammenbau der Scheinwerferanordnung ermittelt und in einem Speicher 9 abgelegt. Dieser Speicher 9 ist in der Treiberschaltung des Stellglieds 7, 12 vorgesehen.

Im Betrieb der Scheinwerferanordnung wird die in dem Speicher 9 abgelegte Abweichung von dem Steuergerät 6 ausgelesen, um das von dem Erfassungsmittel 3, 5 übermittelte Sensorsignal um die Abweichung zu korrigieren. Der so korrigierte Schwenkwinkel wird dann zur Ermittelung der an die Treiberschaltung 12 abzugebenden Steuersignale weiter verarbeitet.

Hallschalter weisen in der Regel, anders als in Fig. 2 dargestellt, eine Hysterese auf. In einem solchen Fall sieht das Ausgangssignal so aus, wie es in Fig. 3 dargestellt ist.

## Patentansprüche

1. Scheinwerferanordnung für ein Kraftfahrzeug mit einer Reflektoreinheit (1), einem Stellglied (7, 12) zum Schwenken zumindest der Reflektoreinheit (1) um zumindest eine im Wesentlichen senkrechte Achse (10) und einem Mittel (3, 5) zum Erfassen eines Schwenkwinkels (4) umfassend einen Positionsgeber (3) und ein Sensorelement (5),
wobei die Scheinwerferanordnung einen Speicher (9) umfasst, in welchem die Lage des Sensorelements (5) bezogen auf die Lage der Reflektoreinheit (1) beim Schwenkwinkel der Größe 0 gespeichert ist,
**dadurch gekennzeichnet, dass**
- die Scheinwerferanordnung ein Steuergerät (6) umfasst, das eine Schnittstelle (13) zur Kommunikation mit einem Kommunikationsnetzwerk in dem Kraftfahrzeug aufweist und das zumindest eine weitere Schnittstelle zur Kommunikation mit dem Erfassungsmittel (3, 5) aufweist,
- der Speicher (9) in der Treiberschaltung des Stellglieds (7, 12) vorgesehen ist,
- die Treiberschaltung (12) des Stellglieds (7,12) über einen LIN-Bus mit dem Steuergerät (6) verbunden ist,
- mittels des Steuergeräts (6) aus dem aus dem Speicher (9) ausgelesenen Wert und dem aus dem vom Erfassungsmittel (3, 5) übermittelten Schwenkwinkel (ϕ) eine um die Lage des Sensorelements (5) korrigierter Schwenkwinkel (ϕ-α) ermittelbar ist.

## Claims

1. Headlamp arrangement for a motor vehicle comprised of a reflector unit (1), an actuator (7, 12) designed to swivel at least the reflector unit (1) around at least one mainly perpendicular axis (10), and a device (3, 5) for sensing the swivel angle (4) comprising a position transducer (3) and a sensor element (5), wherein the headlamp arrangement includes a memory (9) storing information about the position of the sensor element (5) with reference to the position of the reflector unit (1) when the swivel angle is 0,
**characterized in that**
- the headlamp arrangement includes an electronic control unit (6) equipped with an interface (13) for communicating with a communication network installed in the motor vehicle, and at least another interface for communicating with the sensing element (3, 5),
- the memory (9) is designed to reside in the driver circuit of the actuator (7, 12),
- the driver circuit (12) of the actuator (7,12) is connected to the electronic control unit (6) via a LIN bus,
- the electronic control unit (6) is able to combine the value stored in the memory (9) with the swivel angle (ϕ) information delivered by the sensing element (3, 5) to compute a swivel angle (ϕ-α) corrected with reference to the position of the sensing element (5).

## Revendications

1. Système de projecteur destiné à un véhicule avec une unité à réflecteur (1), un élément de réglage (7, 12) pour l'orientation au moins de l'unité à réflecteur (1) d'au moins un axe (10) essentiellement vertical et un dispositif (3, 5) de saisie d'un angle de pivotement (4), comprenant un capteur de position (3) et d'un élément de capteur (5), le système de projecteur comprenant une mémoire (9) dans laquelle est enregistrée la position de l'élément de capteur (5) par rapport à la position de l'unité à réflecteur (1) pour l'angle de pivotement 0,
**caractérisé en ce que**
- le système de projecteur comprend une centrale de commande (6) qui présente une interface (13) pour la communication avec un réseau de communication dans le véhicule et qui présente au moins une autre interface pour la communication avec le moyen de saisie (3, 5),
- la mémoire (9) est prévue dans le circuit pilote de l'élément de réglage (7, 12),
- à l'aide de la centrale de commande (6), à partir de la valeur lue dans la mémoire (9) et à partir de l'angle de pivotement ϕ déterminé par le moyen de saisie (3, 5), l'angle de pivotement (ϕ-∞) corrigé de la position de l'élément de capteur (5) peut être déterminé.
